# EUROPEAN PATENT SPECIFICATION

(11) **EP 3 330 209 B1**
(45) Date of publication and mention of the grant of the patent: **02.10.2024**
(21) Application number: 17204916.5
(22) Date of filing: 01.12.2017
(51) Int. Cl.: B66B 7/06, D07B 1/22

(54) **OVERBRAIDED NON-METALLIC TENSION MEMBERS**
UMFLOCHTENE NICHTMETALLISCHE ZUGGLIEDER
ÉLÉMENTS DE TENSION NON MÉTALLIQUES SURTRESSÉS

(30) Priority: 02.12.2016 US 201662429130 P
(43) Date of publication of application: 06.06.2018
(73) Proprietor: Otis Elevator Company, Farmington, Connecticut 06032 (US)
(72) Inventor: EASTMAN, Scott Alan, East Hartford, CT Connecticut 06108 (US); MOSHER, Daniel A., East Hartford, CT Connecticut 06108 (US); ZHAO, Wenping, East Hartford, CT Connecticut 06108 (US)
(74) Representative: Schmitt-Nilson Schraud Waibel Wohlfrom Patentanwälte Partnerschaft mbB

(56) References cited:
- EP-A1- 2 821 357
- EP-A1- 2 860 141
- EP-A2- 0 995 832
- WO-A1-2015/134023
- US-A1- 2015 307 321
- US-B1- 6 318 504

## Description

The invention disclosed herein relates to elevator systems, and more particularly, to a tension member configured for use in an elevator system.

Elevator systems are useful for carrying passengers, cargo, or both, between various levels in a building. Some elevators are traction based and utilize load bearing members such as ropes or belts for supporting the elevator car and achieving the desired movement and positioning of the elevator car.

As buildings reach new heights in their construction, with some architectural designs over 1 kilometer, more advanced hoisting methods are necessary for efficient transport of people and materials throughout the building. One limitation of conventional hoisting is the weight of conventional steel cable as it is only capable of rises of ~ 700 m. To address this, tension members have been developed using carbon fiber tension elements as these have a substantially higher specific strength and will allow hoisting solutions that can accommodate the proposed architectural designs of over 1 kilometer and there is an advantage of using lightweight tension members in buildings of even rises down to ~ 300 m.

US 6,318,504 B1 discloses a synthetic fiber rope comprising at least an inner layer and an outer layer of load-bearing synthetic fiber strands laid together, said layers being concentric and radically separated from one another forming an interlayer space, and a tubular shaped intersheath positioned in said interlayer space between said layers and enveloping said inner layer, said intersheath being elastically deformable and having a plurality of grooves formed therein, each one of said grooves being contoured to receive an associated one of said fiber strands of am adjacent one of said layers..

EP 2 860 141 A1 discloses a tension member for a hoisting device. The tension member is a load bearing structure comprising a center string and several load bearing strings twisted around the center string in a helical formation.

US 2015/307321 A1 discloses a tension member disclosing the features of the preamble of the independent claims, for a hosting system comprising a core including a plurality of individual load carrying fibers arranged unidirectionally, substantially in a direction parallel to a tension member length in a matrix material, and an outer layer secured to the core and arranged around a perimeter of the core. The outer layer comprises fiber tapes, wherein fibers are braided or woven into a flat, flexible, tape-like structure.

Where ropes are used as load bearing members, each individual rope is not only a traction device for transmitting the pulling forces but also participates directly in the transmission of the traction forces. Where belts are used as a load bearing member, a plurality of tension elements are embedded in an elastomer belt body. The tension elements are exclusively responsible for transmitting the pulling forces, while the elastomer material transmits the traction forces. Due to their light weight and high strength, tension members formed from unidirectional fibers arranged in a rigid matrix composite provide significant benefits when used in elevator systems, particularly high rise systems. The fibers are impregnated with thermosetting resins and then cured to form rigid composites that are surrounded with the elastomer to provide traction for the belt.

Subject-matter of the invention is a tension member having the features indicated in claim 1, a belt having the features indicated in claim 7, and a method of forming a tension member having the features indicated in claim 9. Embodiments of the invention are defined in the respective dependent claims.

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a perspective view of an example of a traction elevator system;
FIG. 2 is a cross-sectional view of an exemplary embodiment of a tension member for an elevator system;
FIG. 3 is a schematic view of a plurality of tension members installed at a sheave;
FIG. 4 is a cross-sectional view of another exemplary embodiment of a tension member; and
FIG. 5 is a schematic view of a process for manufacturing a tension member.

The detailed description explains disclosed embodiments, together with advantages and features, by way of example with reference to the drawings.

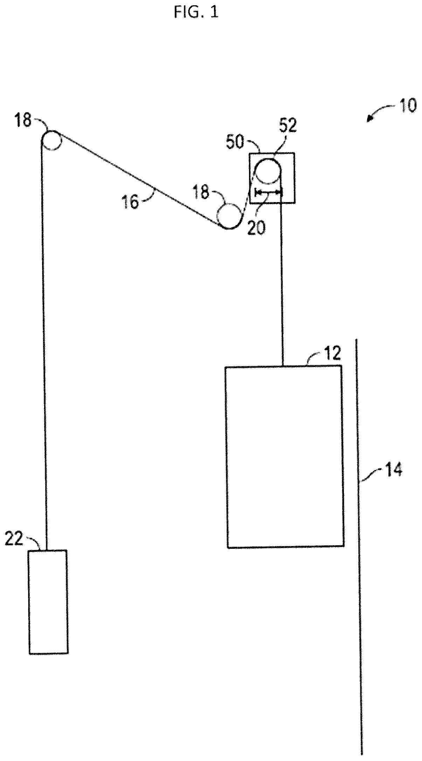

Shown in FIG. 1, is a schematic view of an exemplary traction elevator system 10. Features of the elevator system 10 that are not required for an understanding of the present invention (such as the guide rails, safeties, *etc.*) are not discussed herein. The elevator system 10 includes an elevator car 12 operatively suspended or supported in a hoistway 14 with one or more tension members 16. The one or more tension members 16 interact with one or more sheaves 18 to be routed around various components of the elevator system 10. The one or more tension members 16 could also be connected to a counterweight 22, which is used to help balance the elevator system 10 and reduce the difference in belt tension on both sides of the traction sheave during operation.

The sheaves 18 each have a diameter 20, which may be the same or different than the diameters of the other sheaves 18 in the elevator system 10. At least one of the sheaves could be a traction sheave 52. The traction sheave 52 is driven by a machine 50. Movement of drive sheave by the machine 50 drives, moves and/or propels (through traction) the one or more tension members 16 that are routed around the traction sheave 52. At least one of the sheaves 18 could be a diverter, deflector or idler sheave. Diverter, deflector or idler sheaves are not driven by a machine 50, but help guide the one or more tension members 16 around the various components of the elevator system 10.

In some embodiments, the elevator system 10 could use two or more tension members 16 for suspending and/or driving the elevator car 12. In addition, the elevator system 10 could have various configurations such that either both sides of the one or more tension members 16 engage the one or more sheaves 18 or only one side of the one or more tension members 16 engages the one or more sheaves 18. The embodiment of FIG 1 shows a 1:1 roping arrangement in which the one or more tension members 16 terminate at the car 12 and counterweight 22, while other embodiments may utilize other roping arrangements.

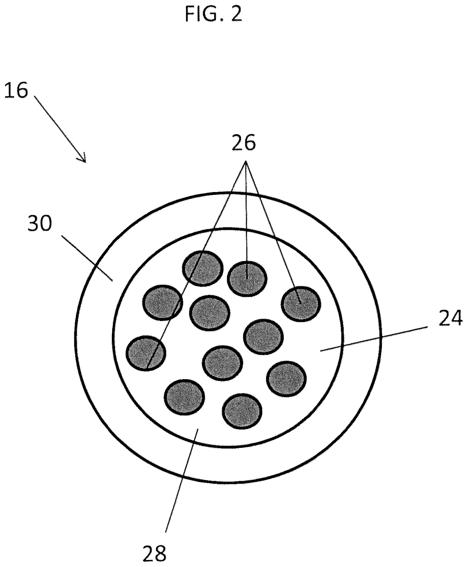

Referring now to FIG. 2, a cross-sectional view of an embodiment of a tension member 16 is shown. The tension member 16 includes a core 24 formed from a plurality of individual load carrying fibers 26 arranged unidirectionally, substantially in a direction parallel to a tension member 16 length, within a matrix material 28.

Exemplary load carrying fibers 26 used to form the core 24 include, but are not limited to, carbon, glass, aramid, nylon, and polymer fibers, for example. Each of the load carrying fibers 26 within the core 24 may be substantially identical or may vary. In addition, the matrix material 28 may be formed from any suitable material, such as polyurethane, vinylester, and epoxy for example. The materials of the load carrying fibers 26 and the matrix material 28 are selected to achieve a desired stiffness and strength of the tension member 16.

The core 24 may be formed as thin layers, in some embodiments by a pultrusion process. In a standard pultrusion process, the load carrying fibers 26 are impregnated with the matrix material 28 and are pulled through a heated die and additional curing heaters where the matrix material 28 undergoes cross linking. A person having ordinary skill in the art will understand that controlled movement and support of the pulled load carrying fibers 26 may be used to form a desired linear or curved profile of the untensioned core 24. In an exemplary embodiment, the core 24 has a cross-sectional thickness of about 0.5 millimeters to about 4 millimeters. In another embodiment, the core 24 has a cross-sectional thickness of 1 millimeter. Further, in some embodiments the core 24 has a circular cross-section, while in other embodiments the core 24 may have other cross-sectional shapes, such as rectangular or oval.

The tension member 16 further includes an outer layer 30 formed from braided or woven fibers that substantially envelops the core 24. The outer layer 30 may be applied to the core 24 by, for example wrapping around the core 24 or braiding around the core 24. The outer layer 30 is formed from fibers of, for example, carbon, glass, aramid, nylon, or polymer fibers. In some embodiments, the outer layer 30 material is the same as the core 24 material, while in other embodiments the materials may differ. Further, in other embodiments the outer layer 30 is formed from metallic wires. The braiding of the outer layer 30 orients fibers off-axis relative to the core 24 to support off-axis stresses on the tension member 16. Further, the outer layer 30 can have lower stiffness which reduces bending stresses and allows the overall tension member 16 to have a larger thickness or diameter than just an aligned fiber tension member. While in the embodiment of FIG. 2, the outer layer 30 and the core 24 are separate and distinct, in other embodiments the outer layer 30 and the core may be intermingled via, for example, the matrix material 28 flowing into the outer layer 30 during manufacturing or during post-processing to remove any sharp boundaries between the core 24 and the outer layer 30. Further, the outer layer 30 can be formed using materials to improve performance during a fire or thermal event or during other conditions.

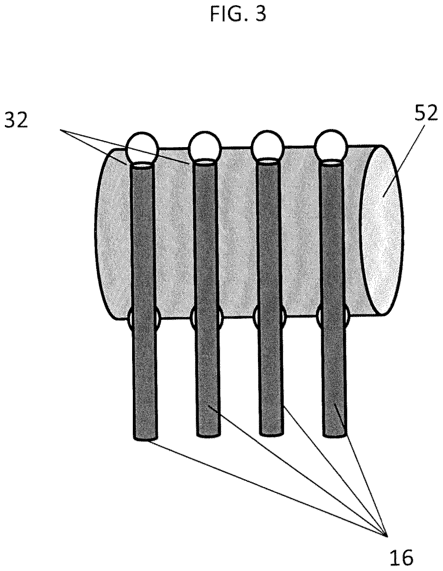

Referring now to FIG. 3, in some embodiments one or more tension members 16 are utilized as cables to support and/or drive the elevator car 12. In such embodiments, the tension members 16 are routed over the traction sheave 52, which may include sheave grooves 32 to position the tension members 16 at the traction sheave 52. In some embodiments, the outer layer 30 is configured to have sufficient flexibility to conform to the sheave grooves 32.

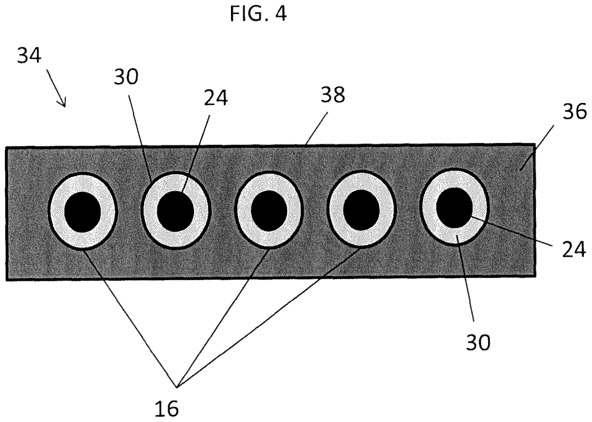

Referring now to FIG. 4, one or more tension members 16 may be utilized in a belt 34, which suspends and/or drives the elevator car 12. The one or more tension members 16 are arranged in a jacket 36. The tension members 16 extend along a length of the belt 34, and are arranged across a lateral width of the belt 34, and in some embodiments are spaced from each other as shown in FIG. 4.

The tension members 16 are at least partially enclosed in the jacket 36, to restrain movement of the tension members 16 in the belt 34 and protect the tension members 16. In embodiments including the jacket 36 defines a traction surface 38 configured to contact a corresponding surface of the traction sheave 52. Exemplary materials for the jacket 36 include the elastomers of thermoplastic and thermosetting polyurethanes, polyamide, thermoplastic polyester elastomers, and rubber, for example. Other materials may be used to form the jacket 36 if they are adequate to meet the required functions of the belt 34. For example, a primary function of the jacket 36 is to provide a sufficient coefficient of friction between the belt 34 and the traction sheave 52 to produce a desired amount of traction therebetween. The jacket 36 should also transmit the traction loads to the tension members 16. In addition, the jacket 36 should be wear resistant and protect the tension members 16 from impact damage, exposure to environmental factors, such as chemicals, for example. One or more additive materials may be incorporated into the jacket 36 to enhance performance such as traction and environmental resistance. In embodiments with the jacket 36, the outer layer 30 with the off-axis fibers promotes improved adhesion between the tension members 16 and the jacket 36.

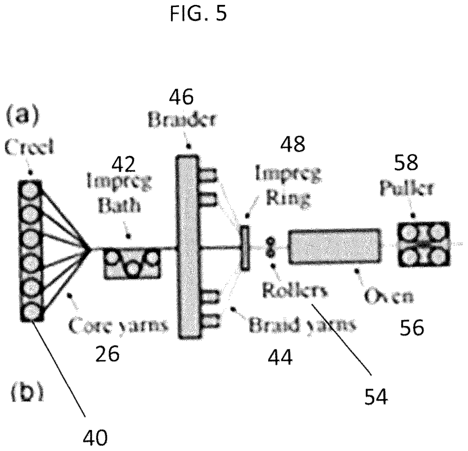

Referring now to FIG. 5, shown is a schematic view of a process for manufacturing a tension member 16, which is illustrated as a continuous manufacturing process. Load carrying fibers 26 are fed from a core reel 40, aligned or grouped, then impregnated with the matrix material 28 at an impregnation bath 42 to form the core 24. The outer layer 30 is formed over the core 24 by feeding outer yarns 44 into a braider 46 and through an impregnation ring 48 to impregnate the braided outer yarns 44 with matrix material. The braided and impregnated outer yarns 44 are positioned around the core 24 and positioned at the core 24 by passing the core 24 and the outer yarns 44 through one or more rollers 54. The assembled core 24 and outer layer 30 are then passed through an oven 56 or other curing apparatus to at least partially set the matrix material. The assembly then passes through a puller 58 to apply tension to the load carrying fibers 26 of the core 24 to their final set position. The assembly can then be cut to length and/or spooled for subsequent fabrication of the belt 34.

While the present disclosure has been described in detail in connection with only a limited number of embodiments, it should be readily understood that the present disclosure is not limited to such disclosed embodiments. Rather, the present disclosure is not to be seen as limited by the foregoing description, but is only limited by the scope of the appended claims.

## Claims

1. A tension member (16) for a lifting and/or hoisting system comprising:
a core (24) including a plurality of individual load carrying fibers (26) arranged unidirectionally, substantially in a direction parallel to a tension member (16) length in a matrix material (28); and
an outer layer (30) secured to the core (24) including a plurality of outer fibers arranged around a perimeter of the core, wherein the outer layer (30) includes a plurality of outer fibers arranged off-axis relative to the load carrying fibers (26) of the core (24),
**characterized in that** the plurality of outer fibers are braided around the core to form the outer layer (30).

2. The tension member (16) of claim 1, wherein the plurality of load carrying fibers (26) comprise one or more of carbon, glass, aramid, nylon, and polymer fibers.

3. The tension member (16) of claim 1 or 2, wherein the matrix material (28) is one or more of polyurethane, vinylester or epoxy.

4. The tension member (16) of any of claims 1 to 3, wherein the plurality of outer fibers are formed from the same material as the plurality of load carrying fibers (26).

5. The tension member (16) of any of claims 1 to 4, wherein the core (24) is formed by a pultrusion process.

6. The tension member (16) of any of claims 1 to 5, wherein the plurality of load carrying fibers (26) extend along an axial length of the tension member (16).

7. A belt (34) for suspending and/or driving an elevator car (12), comprising:
a plurality of tension members (16) according to any of the previous claims, the tension members extending along a length of the belt (34); and
a jacket (36) at least partially encapsulating the plurality of tension members (16) to retain the plurality of tension members.

8. The belt (34) of claim 7, wherein the plurality of tension members (16) are arranged along a lateral width of the belt (34).

9. A method of forming a tension member (16) for an elevator system (10) comprising:
arranging a plurality of load carrying fibers (26) unidirectionally, substantially in a direction parallel to a tension member (16) length;
retaining the plurality of arranged load carrying fibers (26) individually in a matrix material (28) to define a core (24); and
enclosing the core (24) in an outer layer (30) including a plurality of outer fibers arranged around a perimeter of the core (24), wherein the outer layer (30) includes a plurality of outer fibers arranged off-axis relative to the load carrying fibers (26) of the core (24),
**characterized in that** enclosing the core (24) in the outer layer (30) includes braiding the plurality of outer fibers around the core (24) to form the outer layer.

10. The method of claim 9, further comprising impregnating the outer layer (30) with an outer matrix material.

11. The method of any of claim 9 or 10, further comprising forming the tension member (16) via a continuous manufacturing process.

12. The method of claim 11, further comprising cutting the tension member (16) to a selected length.

13. The method of any of claims 9 to 12, wherein the plurality of outer fibers are formed from the same material as the plurality of load carrying fibers (26).

## Patentansprüche

1. Zugglied (16) für ein Hebe- und/oder Hubsystem, umfassend:
einen Kern (24), der eine Vielzahl von einzelnen lasttragenden Fasern (26) beinhaltet, die unidirektional, im Wesentlichen in einer Richtung parallel zu einer Länge eines Zugglieds (16) in einem Matrixmaterial (28) angeordnet sind; und
eine äußere Schicht (30), die an dem Kern (24) befestigt ist, der eine Vielzahl von äußeren Fasern beinhaltet, die um einen Umfang des Kerns herum angeordnet sind, wobei die äußere Schicht (30) eine Vielzahl von äußeren Fasern beinhaltet, die außeraxial relativ zu den lasttragenden Fasern (26) des Kerns (24) angeordnet sind,
**dadurch gekennzeichnet, dass** die Vielzahl von äußeren Fasern um den Kern geflochten ist, um die äußere Schicht (30) zu bilden.

2. Zugglied (16) nach Anspruch 1, wobei die Vielzahl von lasttragenden Fasern (26) eine oder mehrere von Fasern aus Kohlenstoff, Glas, Aramid, Nylon und Polymeren umfasst.

3. Zugglied (16) nach Anspruch 1 oder 2, wobei das Matrixmaterial (28) eines oder mehrere von Polyurethan, Vinylester oder Epoxid ist.

4. Zugglied (16) nach einem der Ansprüche 1 bis 3, wobei die Vielzahl von äußeren Fasern aus demselben Material wie die Vielzahl von lasttragenden Fasern (26) gebildet ist.

5. Zugglied (16) nach einem der Ansprüche 1 bis 4, wobei der Kern (24) durch einen Pultrusionsprozess gebildet wird.

6. Zugglied (16) nach einem der Ansprüche 1 bis 5, wobei sich die Vielzahl von lasttragenden Fasern (26) entlang einer axialen Länge des Zugglieds (16) erstreckt.

7. Riemen (34) zum Aufhängen und/oder Antreiben einer Aufzugskabine (12), umfassend:
eine Vielzahl von Zuggliedern (16) nach einem der vorhergehenden Ansprüche, wobei sich die Zugglieder entlang einer Länge des Riemens (34) erstrecken; und
eine Ummantelung (36), die die Vielzahl von Zuggliedern (16) zumindest teilweise einkapselt, um die Vielzahl von Zuggliedern zu halten.

8. Riemen (34) nach Anspruch 7, wobei die Vielzahl von Zuggliedern (16) entlang einer seitlichen Breite des Riemens (34) angeordnet ist.

9. Verfahren zum Bilden eines Zugglieds (16) für ein Aufzugssystem (10), umfassend:
Anordnen einer Vielzahl von lasttragenden Fasern (26) unidirektional, im Wesentlichen in einer Richtung parallel zu einer Länge eines Zugglieds (16);
Halten der Vielzahl von angeordneten lasttragenden Fasern (26) einzeln in einem Matrixmaterial (28), um einen Kern (24) zu definieren; und
Umschließen des Kerns (24) mit einer äußeren Schicht (30), die eine Vielzahl von äußeren Fasern beinhaltet, die um einen Umfang des Kerns (24) herum angeordnet sind, wobei die äußere Schicht (30) eine Vielzahl von äußeren Fasern beinhaltet, die außeraxial relativ zu den lasttragenden Fasern (26) des Kerns (24) angeordnet sind,
**dadurch gekennzeichnet, dass** das Umschließen des Kerns (24) mit der äußeren Schicht (30) Flechten der Vielzahl von äußeren Fasern um den Kern (24) zum Bilden der äußeren Schicht beinhaltet.

10. Verfahren nach Anspruch 9, ferner umfassend Imprägnieren der äußeren Schicht (30) mit einem äußeren Matrixmaterial.

11. Verfahren nach einem der Ansprüche 9 oder 10, ferner umfassend Bilden des Zugglieds (16) über einen kontinuierlichen Fertigungsprozess.

12. Verfahren nach Anspruch 11, ferner umfassend Zuschneiden des Zugglieds (16) auf eine bestimmte Länge.

13. Verfahren nach einem der Ansprüche 9 bis 12, wobei die Vielzahl von äußeren Fasern aus demselben Material wie die Vielzahl von lasttragenden Fasern (26) gebildet ist.

## Revendications

1. Élément de tension (16) pour un système de levage et/ou de hissage comprenant :
un noyau (24) comportant une pluralité de fibres porteuses de charge (26) individuelles disposées de manière unidirectionnelle, sensiblement dans une direction parallèle à une longueur d'un élément de tension (16) dans un matériau de matrice (28) ; et
une couche externe (30) fixée au noyau (24) comportant une pluralité de fibres externes disposées autour d'un périmètre du noyau, dans lequel la couche externe (30) comporte une pluralité de fibres externes disposées hors axe par rapport aux fibres porteuses de charge (26) du noyau (24),
**caractérisé en ce que** la pluralité de fibres externes sont tressées autour du noyau pour former la couche externe (30).

2. Élément de tension (16) selon la revendication 1, dans lequel la pluralité de fibres porteuses de charge (26) comporte une ou plusieurs fibres de carbone, de verre, d'aramide, de nylon ou de polymère.

3. Élément de tension (16) selon la revendication 1 ou 2, dans lequel le matériau de matrice (28) est un ou plusieurs parmi le polyuréthane, le vinylester ou l'époxy.

4. Élément de tension (16) selon l'une quelconque des revendications 1 à 3, dans lequel la pluralité de fibres externes sont formées à partir du même matériau que la pluralité de fibres porteuses de charge (26).

5. Élément de tension (16) selon l'une quelconque des revendications 1 à 4, dans lequel le noyau (24) est formé par un processus de pultrusion.

6. Élément de tension (16) selon l'une quelconque des revendications 1 à 5, dans lequel la pluralité de fibres porteuses de charge (26) s'étendent le long d'une longueur axiale de l'élément de tension (16).

7. Courroie (34) pour suspendre et/ou entraîner une cabine d'ascenseur (12), comprenant :
une pluralité d'éléments de tension (16) selon l'une quelconque des revendications précédentes, les éléments de tension s'étendant le long d'une longueur de la courroie (34) ; et
une enveloppe (36) encapsulant au moins partiellement la pluralité d'éléments de tension (16) pour retenir la pluralité d'éléments de tension.

8. Courroie (34) selon la revendication 7, dans laquelle la pluralité d'éléments de tension (16) sont disposés le long d'une largeur latérale de la courroie (34).

9. Procédé de formation d'un élément de tension (16) pour un système d'ascenseur (10), comprenant :
la disposition d'une pluralité de fibres porteuses de charge (26) de manière unidirectionnelle, sensiblement dans une direction parallèle à une longueur d'un élément de tension (16) ;
la retenue de la pluralité de fibres porteuses de charge (26) disposées individuellement dans un matériau de matrice (28) pour définir un noyau (24) ; et
l'encapsulation du noyau (24) dans une couche externe (30) comportant une pluralité de fibres externes disposées autour d'un périmètre du noyau (24), dans lequel la couche externe (30) comporte une pluralité de fibres externes disposées hors axe par rapport aux fibres porteuses de charge (26) du noyau (24),
**caractérisé en ce que** l'encapsulation du noyau (24) dans la couche externe (30) comporte le tressage de la pluralité de fibres externes autour du noyau (24) pour former la couche externe.

10. Procédé selon la revendication 9, comprenant en outre l'imprégnation de la couche externe (30) avec un matériau de matrice externe.

11. Procédé selon l'une quelconque des revendications 9 ou 10, comprenant en outre la formation de l'élément de tension (16) via un processus de fabrication continu.

12. Procédé selon la revendication 11, comprenant en outre la découpe de l'élément de tension (16) à une longueur sélectionnée.

13. Procédé selon l'une quelconque des revendications 9 à 12, dans lequel la pluralité de fibres externes sont formées à partir du même matériau que la pluralité de fibres porteuses de charge (26) .
